# FASCICULE DE BREVET EUROPEEN

(11) **EP 3 201 483 B1**
(45) Date de publication et mention de la délivrance du brevet: **26.06.2019**
(21) Numéro de dépôt: 15770950.2
(22) Date de dépôt: 29.09.2015
(51) Int. Cl.: F16B 33/06, B64D 45/02, F16B 5/02, F16B 33/00, F16B 1/00, F16B 4/00

(54) **FIXATION EN INTERFÉRENCE LUBRIFIÉE**
BEFESTIGUNGSVORRICHTUNG MIT GESCHMIERTER PRESSPASSUNG
FASTENER USING LUBRICATED INTERFERENCE FIT

(30) Priorité: 30.09.2014 FR 1459269
(43) Date de publication de la demande: 09.08.2017
(73) Titulaire: Lisi Aerospace, 75012 Paris (FR)
(72) Inventeur: BOURGES, Laurent, Rancho Palos Verdes, CA 90275 (US); STEPHAN, Johan, F-78800 Houilles (FR); VANDAELE, Christophe, F-78700 Conflans Sainte Honorine (FR)
(74) Mandataire: Ipside
(86) Numéro de dépôt international: PCT/EP2015/072468
(87) Numéro de publication internationale: WO 2016/050791

(56) Documents cités:
- WO-A1-2009/112238
- DE-U1-202010 007 769
- GB-A- 2 212 580
- US-A1- 2005 151 120

## Description

La présente invention se rapporte à une fixation conductrice d'électricité pour des appareils de type aéronef, à un procédé d'obtention d'une telle fixation et un procédé d'installation d'une telle fixation dans un assemblage d'éléments de structure.

La nouvelle génération d'avions comprend des structures en matériau composite renforcé de fibres de carbone qui ont l'avantage d'alléger de manière significative l'avion et qui, contrairement aux matériaux métalliques, ne sont sensibles à la corrosion et au phénomène de fatigue. Cependant, contrairement à une structure métallique, ces matériaux composites sont mauvais conducteurs électriques. Ils posent des problèmes d'évacuation des courants et par conséquent de résistance aux impacts de foudre. Il est ainsi nécessaire de combler tout jeu qui existerait entre une fixation et un perçage dans lequel la fixation est installée, pour créer un contact intime entre la fixation et la structure. Ce contact facilite le passage du courant, évite la création d'étincelles et empêche la présence d'un volume d'air qui, au passage de forts courants, se transforme en un plasma sous pression susceptible d'enflammer du carburant dans le cas d'une fixation installée dans une structure de réservoir. C'est pourquoi l'installation en interférence des dispositifs de fixation chemisés s'est répandue ces dernières années dans le domaine des structures en matériaux composites pour permettre l'évacuation des forts courants électriques engendrés par la foudre.

On connait ainsi dans l'état de la technique les fixations chemisées à revêtement partiel des documents US 8,382,413 et WO 2011/050040. Ces fixations comprennent une vis et une douille, installée avec jeu dans un perçage. La douille se dilate radialement dans la structure lors de l'insertion du fût de la vis dans la douille, le fût présentant un diamètre extérieur supérieur à un diamètre intérieur de la douille. Pour permettre l'insertion des fûts des vis, ceux-ci comprennent sur une portion annulaire de leur surface extérieure soit un vernis de glissement contenant un pigment tel que le bisulfure de Molybdène (MoS₂) soit un revêtement organique contenant des pigments d'aluminium et des pigments lubrifiants. Tous deux sont plutôt considérés isolants électriquement du fait de la présence de résine organique diélectrique. Les vis comprennent également une portion annulaire de fût nue conductrice d'électricité. La douille est laissée nue afin de permettre aux courants électriques de passer de la vis à la structure composite.

Le procédé d'application de revêtement lubrifiant partiel sur le fût implique des mises en oeuvre complexes de masquage de portions de vis à l'unité, et ne permet pas de traiter industriellement en vrac de gros volumes de fixations. De plus, l'utilisation des systèmes de fixation chemisés est couteuse et alourdit l'avion.

On connaît également des fixations métalliques filetées destinées à être insérées en interférence directement dans une structure, non chemisées. Ces fixations peuvent être diversement traitées : le matériau de la fixation est soit laissé nu après une passivation, soit revêtu d'aluminium pur par le procédé dit « IVD », soit recouvert d'un revêtement anticorrosion à base de résine de phénol-formaldéhyde comprenant des pigments d'aluminium du type HI-KOTE™ 1 ou HI-KOTE™ 1NC commercialisés par la société HI-SHEAR Corporation, décrits dans les brevets US 3 979 351 et EP 2 406 336, soit anodisé à l'acide sulfurique, soit revêtu de cadmium. Les fixations sont toutes lubrifiées par une dernière couche d'alcool cétylique, qui est une graisse lubrifiante, afin de permettre le montage d'un écrou sur la portion filetée. L'alcool cétylique s'enlève très facilement lors d'une manipulation manuelle, de vibrations lors des transports ou dans les systèmes de pose automatisés ou encore lors d'opération de nettoyage au moyen d'un chiffon.

L'aluminium a une très bonne conductivité électrique, et réduit le frottement dans les filets. Son pouvoir lubrifiant est cependant trop faible pour permettre d'installer une fixation en interférence dans une structure. En effet, une vis revêtue d'aluminium même revêtue d'alcool cétylique, grippe très vite lorsqu'elle est installée dans une structure ou une douille de diamètre intérieur inférieur au diamètre de la vis, et peut ne pas être complètement installée, surtout quand l'épaisseur de structure à serrer est grande.

Le revêtement à pigment d'aluminium protège les pièces en contact
de la corrosion galvanique, et évite tout grippage entre le filetage de la vis et le taraudage d'un écrou, lors du vissage de ce dernier. Il n'est pas considéré comme conducteur d'électricité.

L'anodisation sulfurique est classiquement réalisée sur des pièces en aluminium, en titane, ou en alliage d'aluminium ou de titane afin d'augmenter la résistance à la corrosion de la pièce. La couche n'a aucun pouvoir lubrifiant et est conductrice lorsque son épaisseur est inférieure au micron.

DE 20 2010 007769 U1 divulgue une autre fixation connue de l'état de l'art.

US 2005/0151120 A1 divulgue un procédé d'obtention d'une fixation connu de l'état de l'art.

Aucune des ces variantes de fixation ne peut être montée en interférence dans une zone de l'avion susceptible d'être frappée par la foudre, soit du fait d'une insuffisance de lubrification du fût, soit du fait d'une résistance électrique du revêtement anticorrosion trop importante compromettant le passage des courants de foudre.

Un but de l'invention est de résoudre ces problèmes. L'invention a ainsi pour objet une fixation métallique pour assembler avec interférence au moins deux éléments de structure comprenant un perçage traversant, la fixation comportant une tête élargie, un fût présentant avant installation un diamètre extérieur supérieur à un diamètre intérieur de perçage, ledit fût comprenant une surface conductrice. Avant installation, au moins la surface conductrice est recouverte d'une couche lubrifiante dont la composition comprend un mélange d'au moins une polyoléfine et d'un polytétrafluoroéthylène, comprenant au moins 80% en masse de polyoléfine et de polytétrafluoroéthylène, déterminée de façon à présenter une adhérence suffisante pour empêcher son abrasion par manipulation manuelle de la fixation et suffisamment faible pour être arrachée de la surface conductrice au moins partiellement lors du montage en interférence de la fixation.

La couche lubrifiante a un haut pouvoir lubrifiant et une faible adhérence sur la surface extérieure du fût, bien que suffisante pour ne pas être enlevée par simple manipulation manuelle. Lors de l'insertion de la fixation métallique en interférence dans la structure, cette couche est progressivement et partiellement arrachée du fût, laissant une partie de la surface extérieure métallique du fût en contact avec la structure, permettant la propagation des courants électriques issus de la foudre dans la structure.

L'invention est bien sûr applicable à l'assemblage de structures mixtes, c'est à dire utilisant des matériaux composites et métalliques, à l'assemblage de structures purement métalliques.

La fixation selon l'invention peut également comprendre au moins une des caractéristiques suivantes, isolée ou en combinaison :
- la polyoléfine est un polyéthylène ou un polypropylène,
- la couche lubrifiante comprend également un dessicant et un biocide,
- la surface conductrice comprend une couche d'anodisation sulfurique d'une épaisseur inférieure à 1 micron,
- la surface conductrice est un métal ayant subi une passivation,
- la surface conductrice est une couche d'aluminium déposé sous vide,
- la surface conductrice comprend la totalité de la surface extérieure du fût,
- la surface conductrice comprend une portion de la surface extérieure du fût,
- la surface conductrice comprend une portion annulaire du fût de la fixation,
- la surface conductrice comprend une portion axiale du fût de la fixation,
- la couche de lubrifiant recouvre en outre une portion filetée de la fixation,
- la fixation comprend en outre une queue de traction et une gorge de rupture dimensionnée pour casser sous une certaine contrainte en tension.

L'invention porte également sur un procédé d'obtention d'une fixation métallique pour assembler avec interférence au moins deux éléments de structure comprenant un perçage traversant, le procédé comprenant les étapes de
- fourniture d'une fixation métallique comportant une tête élargie, un fût présentant avant installation un diamètre extérieur supérieur à un diamètre intérieur du perçage, ledit fût comprenant une surface conductrice,
- pulvérisation d'une, ou trempage dans, une solution alcaline comprenant en masse 60 à 80% d'un solvant de base aqueuse et 20% à 35% d'un mélange d'au moins une polyoléfine et d'un polytétrafluoroéthylène, d'une partie au moins de la fixation,
- séchage de la fixation de sorte à obtenir une couche polymère lubrifiante sèche comprenant un mélange d'au moins une polyoléfine et d'un polytétrafluoroéthylène.

Le procédé de fabrication d'une fixation selon l'invention peut également comprendre au moins une des caractéristiques suivantes, isolée ou en combinaison :
- le séchage est effectué à une température comprise entre 60°C et
- 80°C,
- une étape de centrifugation est effectuée après le trempage et avant le séchage,
- l'étape de pulvérisation ou trempage est précédée d'une étape de dépôt d'une couche d'aluminium ou une étape d'anodisation sulfurique.

L'invention porte également sur un procédé d'installation d'une fixation métallique au travers d'un perçage traversant au moins deux éléments de structure, la fixation comportant une tête élargie, un fût présentant avant installation un diamètre extérieur supérieur à un diamètre intérieur du perçage, ledit fût comprenant une surface conductrice. Avant installation, au moins la surface conductrice est revêtue d'une couche de polymères lubrifiants comprenant au moins 80% en masse d' un mélange d'au moins une polyoléfine et d'un polytétrafluoroéthylène. Pendant l'installation, lors d'une étape d'insertion en interférence du fût de la vis dans la structure, la couche lubrifiante est partiellement arrachée du fût de la vis.

L'invention porte également sur l'utilisation d'au moins une fixation métallique selon un mode de réalisation de l'invention, au travers d'un perçage traversant au moins deux éléments de structure d'un aéronef, pour dissiper dans au moins un élément de structure des courants électriques, lorsqu'au moins la tête de la fixation est frappée par la foudre.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1 : une fixation selon un premier mode de réalisation, avant installation dans une structure en coupe;
- figure 2 : une fixation selon un deuxième mode de réalisation de l'invention,
- figure 3 : une fixation selon un troisième mode de réalisation de l'invention,
- figure 4 : l'évolution du coefficient de frottement de fixations de l'art antérieur de différents diamètres, revêtues d'alcool cétylique,
- figure 5 : l'évolution du coefficient de frottement de fixations selon un mode de réalisation de l'invention, revêtues de lubrifiant,
- Figure 6 : une fixation selon un quatrième mode de réalisation de l'invention.

Dans ces figures, les éléments identiques conservent les mêmes références.

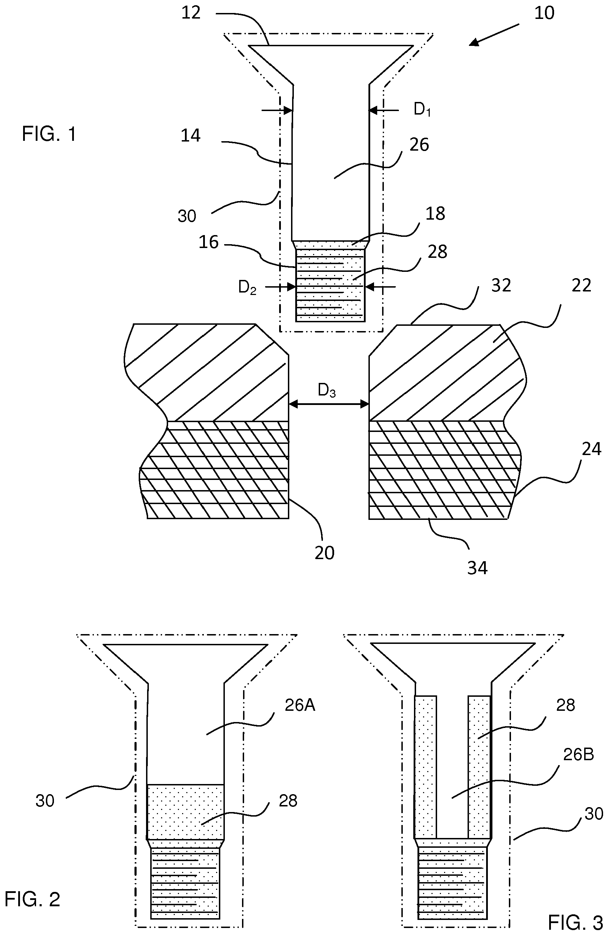

La figure 1 représente, de façon schématique, une vue de côté d'une fixation 10 avant installation dans un perçage 20 réalisé dans des éléments de structure 22, 24, figurés en coupe. Préférentiellement, une structure au moins est en matériau composite, ici la structure 24.

La fixation 10 métallique comporte une tête 12 fraisée, un fût 14 cylindrique présentant un diamètre extérieur D₁ et une portion de blocage 16 sous la forme d'un filetage présentant un diamètre extérieur D₂ mesuré en crête de filet, D₂ étant inférieur à D₁. Une portion de transition 18 raccorde le fût 14 cylindrique à la portion filetée 16. Le diamètre D₃ du perçage 20 avant installation de la fixation 10 est inférieur au diamètre D₁ extérieur du fût 14, et supérieur au diamètre D₂ de la portion filetée, pour que les filets ne soient pas endommagés lors de l'introduction de la fixation 10 dans le perçage 20.

Dans l'exemple illustré, la fixation 10 est en alliage de titane qui a subi une anodisation sulfurique, créant une couche d'anodisation d'épaisseur inférieure à un micron sur toute la surface extérieure de la fixation. La surface 28 extérieure de la portion filetée 16 et de la portion de transition 18 est recouverte d'une deuxième couche de revêtement lubrifiant anticorrosion contenant des pigments d'aluminium du type HI-KOTE™ 1NC. Cette surface 28 est donc isolante (elle est représentée avec un fond pointillé sur les figures 1 à 3 et 6). La surface 26 de la tête 12 et du fût 14 est conductrice électriquement.

Dans l'exemple de la figure 1, toute la surface du fût 14 est conductrice. Cependant, seule une portion annulaire (26A) du fût (FIG. 2), ou une ou plusieurs portions axiales (26B), sur toute la hauteur du fût ou sur une partie seulement de la hauteur du fût (FIG.3) pourrait être conductrice. Les autres portions peuvent ainsi être recouvertes de revêtement lubrifiant anticorrosion contenant des pigments d'aluminium.

Dans les exemples des figures 1 à 3 et 6, la fixation 10 est entièrement recouverte d'une couche 30 lubrifiante, symbolisée par un trait mixte sur les figures. L'épaisseur de la couche 30 lubrifiante peut varier de 5 à 25 microns sans que cette épaisseur n'affecte les performances mécaniques ou de conduction électrique de la fixation.

Le déposant a constaté avec surprise qu'une telle vis 10 peut être installée en interférence dans une structure et apte à conduire les courants électriques lorsque au moins la surface extérieure du fût est recouverte d'une couche 30 lubrifiante comprenant un mélange de polyoléfine(s) et de polytétrafluoroéthylène. Le demandeur a également constaté que l'application de cette même couche 30 sur le revêtement lubrifiant anticorrosion de la portion filetée réduisait significativement la dispersion du couple nécessaire pour installer la fixation, par rapport à la dispersion engendrée par l'utilisation d'alcool cétylique. De plus, le pouvoir lubrifiant de cette couche 30 lubrifiante est très homogène quel que soit le substrat sur lequel il est appliqué.

Le demandeur a ainsi testé l'installation en interférence de deux lots de fixations 10 de diamètres extérieurs différents (diamètres mesurés en 16^{ème} de pouces), recouverts d'une couche 30 lubrifiante de différentes épaisseurs. Les configurations testées et indiquées dans la table 1 sont les suivantes :
- Configuration 1 : application de la couche 30 lubrifiante par trempage et centrifugation,
- Configuration 2 : application manuelle de la couche 30 lubrifiante en une passe au pistolet d'une durée d'une seconde,
- Configuration 3 : application manuelle de la couche 30 lubrifiante en une passe au pistolet d'une durée de 15 secondes.

L'interférence est mesurée en comparant le diamètre D₃ d'un perçage réalisé dans une éprouvette en aluminium simulant une structure, au diamètre extérieur D₁ du fût 14 de la fixation 10 avant installation. L'épaisseur de la couche 30 lubrifiante est mesurée avant insertion de la fixation 10. La fixation 10 est installée dans le perçage en poussant sur la tête 12, l'effort d'installation étant mesuré jusqu'à l'accostage de la tête avec l'éprouvette. L'éprouvette est ensuite tronçonnée pour retirer la fixation 10 sans endommager la surface du fût 14, et l'épaisseur de la couche 30 lubrifiante restante après installation est mesurée. Les valeurs moyennes des résultats de ces mesures sont indiquées dans la table 1.

**Table 1**

| | | **Epaisseur couche 30 avant installation (µm)** | **Epaisseur couche 30 après installation (µm)** | **Interférence (mm)** | **Effort d'Installation (N)** |
|---|---|---|---|---|---|
| **Diam.4** | **Conf. 1** | 7,7 | 1,6 | 0,070 | 6 107 |
| | **Conf. 2** | 8,3 | 1,7 | 0,068 | 6 730 |
| | **Conf. 3** | 23,5 | 2,1 | 0,099 | 6 099 |
| **Diam.10** | **Conf. 1** | 8,3 | 0,9 | 0,065 | 10 241 |
| | **Conf. 2** | 9,8 | 1,0 | 0,067 | 11 294 |
| | **Conf. 3** | 22,8 | 1,0 | 0,098 | 10 960 |

Dans tous les cas, les fixations 10 ont été insérées en interférence jusqu'à ce que les têtes 12 entrent en contact avec la surface des éprouvettes d'essai avec un effort d'installation modéré. Selon les configurations, un pelage de la couche 30 lubrifiante est observé, le surplus restant contenu sous tête ou étant repoussé à l'extérieur. L'épaisseur de la couche 30 lubrifiante après insertion est très homogène, et comprise entre 0,9 et 2,1 µm.

Plusieurs fixations 10 installées en interférence dans des éprouvettes en composite à fibre de carbone ont fait l'objet de tests de foudre pour vérifier leurs conductivités électriques. Pour la réalisation de ces essais, les éprouvettes comprenant les fixations sont installées dans une chambre noire. Certaines têtes 12 de fixations sont frappées par un courant de très forte amplitude équivalent à celui de la foudre. Une caméra enregistre l'essai afin de détecter un étincelage ou un dégazage autour des fixations 10. Les éprouvettes sont ensuite extraites de la chambre et découpées afin d'examiner visuellement la surface des fixations 10 au microscope électronique à balayage.

Les essais menés montrent qu'aucun étincelage ni dégazage n'a été produit lors de l'essai. Les analyses visuelles montrent qu'aucun fût 14 n'a été endommagé par la foudre, mais que des portions de la couche 30 lubrifiante et de la couche d'anodisation ont été enlevées lors de l'insertion. Une théorie est que la rugosité des fibres de carbone dans le matériau composite a un effet abrasif sur une portion de la surface du fût, mais que cet effet n'est pas continu sur toute la hauteur du fût.

Selon une variante de l'invention, la surface conductrice 26 peut être constituée par la surface nue ou passivée du métal constituant la fixation, ou par une couche d'aluminium déposée sous vide sur la surface nue du métal constituant la fixation.

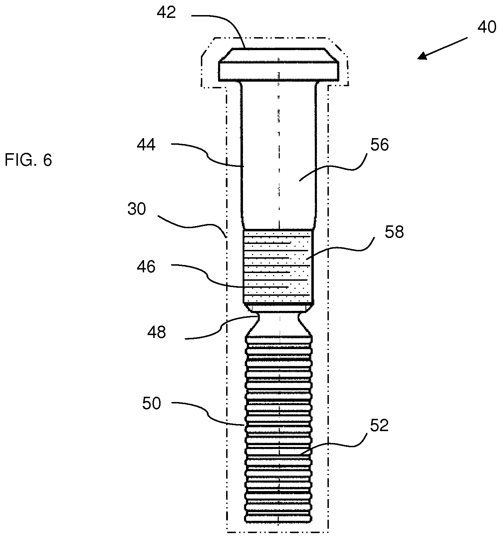

Le demandeur a en effet constaté avec surprise que le pouvoir lubrifiant de la couche 30 lubrifiante ne dépendait pas du support sur lequel elle était appliquée. Ainsi, le demandeur a réalisé plusieurs essais d'insertions de fixations 40 comprenant une queue de traction 50 (figure 6) de quatre diamètres différents, comprenant divers substrats revêtus soit d'alcool cétylique soit de couche 30 lubrifiante. L'insertion a été réalisée en interférence, au moyen d'une machine de traction tirant la queue de traction, et mesurant les efforts d'installation. Un calcul permet de déterminer les coefficients de frottement entre la fixation 40 et la structure dans laquelle la fixation est insérée.

Les configurations testées sont les suivantes :
- configuration 1 (HK1NC/AC/MIF) : fixation couverte d'une première couche de revêtement lubrifiant anticorrosion HI-KOTE™ 1NC et d'une deuxième couche d'alcool cétylique sur l'ensemble de la fixation; installation en interférence moyenne ;

- configuration 2 (HK1NC/lub. organique/MIF) : fixation couverte d'une première couche de revêtement lubrifiant anticorrosion HI-KOTE™ 1NC et d'une deuxième couche 30 lubrifiante sur l'ensemble de la fixation ; installation en interférence moyenne ;
- configuration 3 (HK1NC/AC/HIF) : fixation couverte de revêtement lubrifiant anticorrosion HI-KOTE™ 1NC et d'une deuxième couche d'alcool cétylique sur l'ensemble de la fixation; installation en forte interférence ;
- configuration 4 (HK1NC/lub. organique/HIF) : fixation couverte de revêtement lubrifiant anticorrosion HI-KOTE™ 1NC et d'une deuxième couche 30 lubrifiante sur l'ensemble de la fixation; installation en forte interférence ;
- configuration 5 (OAS/HK1 NC/AC/MIF) : fixation comprenant une première couche d'anodisation sulfurique, une deuxième couche de revêtement lubrifiant anticorrosion HI-KOTE™ 1NC sur la portion filetée uniquement, et une troisième couche d'alcool cétylique sur l'ensemble de la fixation; installation en interférence moyenne;
- configuration 6 (OAS/HK1 NC/lub. organique/MIF) : fixation comprenant une première couche d'anodisation sulfurique, une deuxième couche de revêtement lubrifiant anticorrosion HI-KOTE™ 1NC sur la portion filetée uniquement, et une troisième couche 30 lubrifiante sur l'ensemble de la fixation; installation en interférence moyenne.

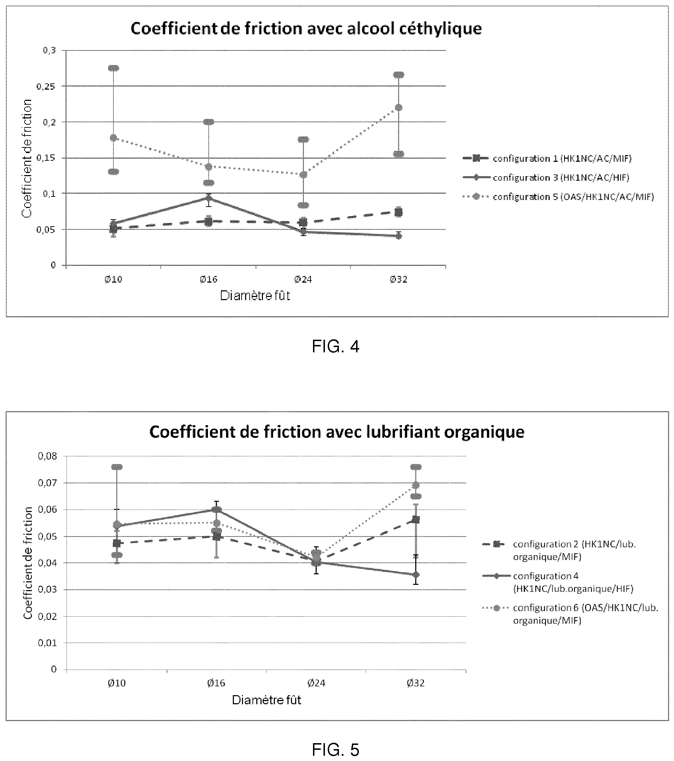

Les figures 4 et 5 illustrent les résultats moyens des essais réalisés. La figure 4 illustre l'évolution du coefficient de frottement de fixations de l'art antérieur de différents diamètres, revêtues d'alcool cétylique. La figure 5 montre l'évolution du coefficient de frottement de fixations 40 selon un mode de réalisation de l'invention, géométriquement identiques à celles utilisées pour les essais avec de l'alcool cétylique et ayant subi les mêmes traitements, mais revêtues d'une couche 30 lubrifiante et non d'alcool cétylique.

L'utilisation de l'alcool cétylique est clairement dépendante du substrat comme le montre la courbe de la configuration 5 sur la figure 4, décalée vers le haut par rapport aux courbes des configurations 1 et 3, ayant le même substrat. Les coefficients de frottement calculés varient ainsi entre 0,045 et 2,10 en fonction du diamètre et du substrat.

En comparaison, l'utilisation de la couche 30 lubrifiante montre que le coefficient de frottement est dans une plage resserrée variant entre 0,035 et 0,07 quel que soit le diamètre et le substrat (fig. 5).

L'utilisation de la couche 30 lubrifiante permet donc d'installer une fixation avec un couple ou un effort d'installation connu avec une grande précision, bien meilleure que celle obtenue lors de l'utilisation de l'alcool cétylique. Cette couche 30 permet ainsi de limiter le risque de rupture des fixations lors de l'installation, puisque le couple ou l'effort d'installation, qui est fonction du coefficient de friction entre la fixation et la structure, est très peu dispersé.

La couche 30 lubrifiante est obtenue par exemple à partir d'une solution alcaline liquide, de pH compris entre 8 et 10, comprenant au moins un mélange de polymères lubrifiants dispersés dans une base aqueuse. A l'état liquide, la composition de la solution est décrite dans la table 2.

**Table 2**

| **Composé** | **% masse** |
|---|---|
| Solvant : Eau | 50 - 65 |
| Solvant : Isopropanol | 10 - 15 |
| Polymères lubrifiants | 20 - 35 |
| Autres composants | 0 - 7 |

Le solvant est par exemple un mélange d'eau et d'isopropanol. Liquide à sa température d'utilisation, le solvant dissout et/ou dilue les autres substances sans les modifier chimiquement et sans lui-même se modifier. L'isopropanol permet d'obtenir un séchage plus rapide de la solution une fois appliquée. Le solvant s'évapore au séchage.

Le polymère lubrifiant est par exemple une composition comportant une polyoléfine, ou un mélange de polyoléfines, par exemple un mélange de polyéthylène et/ou de polypropylène, et du polytétrafluoroéthylène.

Une polyoléfine est un polymère d'oléfines qui a une structure générale du type

-(CH₂-CRR')ₙ

dans lequel les radicaux R et R' peuvent être un atome d'hydrogène, un groupe méthyl (-CH₃), éthyle (-C₂H₅) ou propyl (-C₃H₇).

Le pourcentage en masse de polyéoléfine(s) dans la solution est par exemple compris entre 19,5 et 30%, et le pourcentage en masse du polytétrafluoroéthylène dans la solution est compris entre 0,5 et 5 %.

La solution peut en outre comprendre jusqu'à 4% en masse d'un dessicant, par exemple du gel de silice. Le dessicant permet d'accélérer le temps de séchage de la solution une fois appliquée.

La solution peut en outre comprendre jusqu'à 2% en masse d'un tensioactif comme du polyéthylène glycol éther. Il améliore la dispersion des polymères lubrifiants dans un solvant de base aqueuse. Le tensioactif s'évapore au séchage.

La solution peut en outre comprendre moins de 1% en masse d'un biocide qui évite la formation rapide de bactéries et de champignons susceptibles de se développer dans une solution de base aqueuse.

L'extrait sec d'une telle solution comprend les polymères lubrifiants, et si la solution liquide en contient, le dessicant et/ou le biocide, soit en masse, entre 20 et 40%. L'extrait sec comprend au moins 80% de polymères lubrifiants, et au plus 100%, si la solution ne comprend ni dessicant ni biocide.

La table 3 indique une formulation préférée de la solution.

**Table 3**

| **Composé** | **% masse** |
|---|---|
| Solvant : Eau | 53,9 |
| Solvant : Isopropanol | 15 |
| Polymères lubrifiants | 26 |
| Dont : PTFE | 1 |
| Autres composants | |
| Gel de silice | 3.0 |
| Alcool PEG Ether | 2.0 |
| Biocide | 0.1 |

L'extrait sec d'une telle formulation comprend les polymères lubrifiants, le gel de silice et le biocide, soit 29,1% en masse. Les polymères lubrifiants constituent dans cet exemple 89,34% en masse de l'extrait sec (26% des 29,1% de matière sèche).

Un mode d'obtention de la fixation 10 comprenant une couche 30 lubrifiante est le suivant.

Dans une première étape, la fixation 10 métallique issue de la forge et/ou usinée est dégraissée, séchée puis sablée, afin d'offrir une surface extérieure propre et propice à l'adhésion d'un revêtement. Eventuellement, un dépôt d'aluminium sous vide ou une oxydation anodique, partielle ou sur la totalité de la surface extérieure de la fixation 10, est réalisé. Si nécessaire, les filets de la fixation sont recouverts d'un revêtement anticorrosion lubrifiant de type HI-KOTE™ 1NC.

Dans une deuxième étape, la fixation est chargée dans un panier puis trempée dans une solution alcaline comprenant en masse 60 à 80% d'un solvant de base aqueuse et 20% à 35% en masse d'un mélange de polyoléfine(s) et de polytétrafluoroéthylène dispersés dans le solvant, pendant une minute au plus.

Le panier est centrifugé pour essorer l'excès de lubrifiant, puis séché entre 60°C et 80°C afin que les solvants s'évaporent.

Ce procédé permet d'obtenir à la surface extérieure de la vis 10 une couche 30 comprenant au moins 80% de polymères lubrifiants, d'une épaisseur de quelques microns. Il est à noter que la température de séchage est inférieure à la plus basse température de fusion des polyoléfines. En effet, une température supérieure à 150°C conduit à un jaunissement voir un brunissement de la couche de polymère et contribue à une détérioration des performances du revêtement.

Lorsque la totalité de la surface de la fixation peut être revêtue de la couche 30 lubrifiante, un tel procédé est avantageux car il permet de traiter en une fois de gros volumes de fixations.

Un autre mode d'application de la couche 30 lubrifiante consiste à pulvériser une solution alcaline comprenant en masse 60 à 80% d'un solvant de base aqueuse et 20% à 35% d'un mélange de polyoléfine(s) et de polytétrafluoroéthylène au moyen d'un pistolet sur tout ou partie de la fixation 10. Dans ce cas, l'épaisseur de la couche 30 lubrifiante est maîtrisée par l'opérateur et l'opération de centrifugation n'est pas nécessaire.

Un tel procédé est utilisé principalement quand une partie de la fixation seulement doit être revêtue. Par exemple, si seulement une portion de fût doit être revêtue, la tête et une partie du fût devant être masquées. Les fixations sont dans ce cas installées dans des plaques percées assurant le masquage de la portion non lubrifiée, et l'opérateur ou un robot pulvérise la solution alcaline uniquement du côté opposé à la tête.

Le procédé d'installation de la vis 10 comportant une couche 30 lubrifiante, dans un perçage traversant au moins deux structures d'un aéronef est le suivant.

La longueur de la fixation 10 est choisie en fonction de l'épaisseur des structures à assembler de sorte que la portion filetée 16 ressorte de la structure 24 après avoir été insérée. L'insertion de la fixation en interférence dans la structure se fait par poussée sur la tête, ou par traction de la queue de traction si la fixation en comporte une, ou encore par vissage d'un écrou sur la portion filetée dans le cas de fixations à fut conique. Grâce à son fort pouvoir lubrifiant, la couche 30 lubrifiante permet l'insertion en interférence de la vis. Cependant, du fait de cette même interférence entre la surface extérieure du fût de la vis et la surface intérieure de la structure et de la faible adhérence de la couche 30 sur le fût de la vis, la couche 30 lubrifiante est partiellement arrachée du fût de la vis à la fois sur sa hauteur et sur sa périphérie, laissant à nu des portions conductrices de fût 14. L'enlèvement de la couche 30 n'est pas total du fait des tolérances de fabrication de la vis et du mode d'application du lubrifiant sur la vis, qui peuvent constituer très localement des poches de réservoir de lubrifiant de quelques microns d'épaisseur.

La couche 30 lubrifiante réduit suffisamment les forces de frottement entre la vis et la structure pour permettre une installation en interférence. Son adhérence est suffisamment forte pour adhérer au fût et résister à toute manipulation manuelle, et suffisamment faible pour être enlevée partiellement lors d'un montage en interférence au fur et à mesure de l'installation.

Une fois la tête 12 de la vis 10 en contact avec la surface extérieure 32 de la structure 22, dirigée vers l'extérieur de l'aéronef, et l'écrou au contact de la surface extérieure 34 de la structure 24, dirigée vers l'intérieur de l'aéronef, la fixation 10 est installée et assemble sans jeu les structures 22 et 24. Lorsque la tête 12 de la vis 10 est frappée par la foudre, le courant électrique s'évacue dans les éléments de structure 22, 24 ou, dans le cas de structures composites vers un treillis métallique éventuellement inclus sur la surface 32, ou a l'intérieur des éléments de structure, via les portions métalliques du fût 14.

L'invention n'est bien sûr pas limitée aux exemples décrits ci-dessus. Ainsi, le fût 14 de la vis peut être conique et inséré dans un perçage conique, ou dans une chemise dont la surface intérieure est conique, et la surface extérieure est cylindrique, installée dans un perçage cylindrique. Une fixation comprenant une telle chemise est décrite dans la demande de brevet FR 2 946 707 du demandeur. La tête élargie de la vis peut être de n'importe quelle forme connue, par exemple protubérante ou bombée.

En variante, la fixation peut comprendre une queue de traction munie de gorges de traction et cassable au niveau d'une gorge de rupture, comme représenté en figure 6. La fixation 40 comprend une tête 42 protubérante, un fût 44 cylindrique, une portion filetée 46, une gorge de rupture 48 dimensionnée pour casser sous une certaine contrainte en tension ou en flexion, et une queue de traction 50 comprenant des gorges de traction 52.

Dans cet exemple, la tête 42 et le fût 44 ont une surface extérieure 56 conductrice, et la portion filetée présente une surface extérieure 58 recouverte de revêtement anticorrosion HI-KOTE™ 1NC, isolante électriquement. L'ensemble de la fixation est revêtue d'une couche 30 lubrifiante comprenant un mélange de polyoléfine(s) et de polytétrafluoroéthylène, par exemple par trempage, centrifugation et séchage comme précédemment décrit. Bien sûr, seul le fût 44 pourrait être recouvert de la couche 30 lubrifiante, au moyen d'un pistolet et de masques sur une portion seulement, annulaire, axiale ou d'une autre forme.

Cette fixation 40 est installée en interférence dans un perçage d'épaisseur telle que la queue de traction 52 ressorte de la structure, du côté opposé à la tête 42. Un outillage comprenant des mâchoires agrippe les gorges de traction et tire la fixation 40 dans le perçage. La queue de traction est ensuite cassée au niveau de la gorge de rupture 50 par une traction supplémentaire, ou par application d'une flexion sur la queue de traction.

En variante sur tous les types de fixations décrits ci dessus, la portion de blocage filetée peut être remplacée par des gorges de sertissage visant à accueillir une bague sertie à la place d'un écrou vis.

## Revendications

1. Fixation (10 ; 40) métallique pour assembler avec interférence au moins deux éléments de structure (22, 24) comprenant un perçage (20) traversant, la fixation comportant une tête élargie (12 ; 42), un fût (14 ; 44) présentant avant installation un diamètre extérieur (D₁) supérieur à un diamètre intérieur (D₃) du perçage, ledit fût comprenant une surface conductrice (26 ; 56),
dans laquelle fixation au moins la surface conductrice (26; 56) est recouverte d'une couche (30) lubrifiante dont la composition comprend un mélange d'au moins une polyoléfine et d'un polytétrafluoroéthylène, ladite composition étant déterminée de façon à présenter une adhérence suffisante pour empêcher son abrasion par manipulation manuelle de la fixation et suffisamment faible pour être arrachée de la surface conductrice au moins partiellement lors du montage par interférence de la fixation, **caractérisé en ce que** la couche lubrifiante (30) comprend au moins 80% en masse de polyoléfine et de polytétrafluoroéthylène.

2. Fixation (10 ; 40) selon la revendication 1 telle que la polyoléfine est un polyéthylène ou un polypropylène.

3. Fixation (10 ; 40) selon la revendication 1, telle que ladite couche (30) comprend également un dessicant et/ou un biocide.

4. Fixation (10 ; 40) selon la revendication 1 telle que la surface conductrice (26 ; 56) comprend une couche d'anodisation sulfurique d'une épaisseur inférieure à 1 µm.

5. Fixation (10 ; 40) selon la revendication 1 telle que la surface conductrice (26 ; 56) est un métal ayant subi une passivation.

6. Fixation (10 ; 40) selon la revendication 1 telle que la surface conductrice (26 ; 56) est une couche d'aluminium déposé sous vide.

7. Fixation (10 ; 40) selon la revendication 1 telle que la surface conductrice (26; 56) comprend la totalité de la surface extérieure du fût.

8. Fixation (10 ; 40) selon la revendication 1 telle que la surface conductrice (26A, 26B) comprend une portion seulement de la surface extérieure du fût.

9. Fixation (10 ; 40) selon la revendication 8 telle que la surface conductrice comprend une portion annulaire (26A) du fût de la fixation.

10. Fixation (10 ; 40) selon la revendication 8 telle que la surface conductrice comprend une portion axiale (26B) du fût de la fixation.

11. Fixation (10 ; 40) selon l'une des revendications précédentes telle que la couche (30) lubrifiante recouvre en outre une portion filetée de la fixation.

12. Fixation (40) selon l'une des revendications 1 à 11 comprenant en outre une queue de traction (50) et une gorge de rupture (48) dimensionnée pour casser sous une certaine contrainte en tension.

13. Procédé d'obtention d'une fixation (10 ; 40) métallique pour assembler avec interférence au moins deux éléments de structure (22, 24) comprenant un perçage (20) traversant, le procédé comprenant une étape de
- fourniture d'une fixation métallique comportant une tête élargie, un fût présentant avant installation un diamètre extérieur (D1) supérieur à un diamètre intérieur (D3) du perçage, ledit fût comprenant une surface conductrice,
et **caractérisé en ce qu'**il comporte les étapes de :
- pulvérisation d'une, ou trempage dans, une solution alcaline comprenant en masse 60 à 80% d'un solvant de base aqueuse et 20% à 35% d'un mélange d'au moins une polyoléfine et d'un polytétrafluoroéthylène, d'une partie au moins de la fixation,
- séchage de la fixation de sorte à obtenir une couche (30) lubrifiante comprenant un mélange d'au moins une polyoléfine et d'un polytétrafluoroéthylène.

14. Procédé selon la revendication 13 dans lequel le séchage est effectué à une température comprise entre 60°C et 80°C.

15. Procédé selon la revendication 13 dans lequel une étape de centrifugation est effectuée après le trempage et avant le séchage.

16. Procédé selon la revendication 13 dans lequel l'étape de pulvérisation ou trempage est précédée d'une étape de dépôt d'une couche d'aluminium ou d'une étape d'anodisation sulfurique.

17. Procédé d'installation d'une fixation (10 ; 40) métallique au travers d'un perçage (20) traversant au moins deux éléments de structure (22, 24), la fixation comportant une tête élargie (12 ; 42) et un fût (14 ; 44) présentant avant installation un diamètre extérieur (D₁) supérieur à un diamètre intérieur (D₃) du perçage, ledit fût comprenant une surface conductrice (26 ; 56),
**caractérisé en ce qu'**avant installation, au moins la surface conductrice (26) est revêtue d'une couche (30) lubrifiante comprenant au moins 80 % en masse d'un mélange d'au moins une polyoléfine et un polytétrafluoroéthylène, et **en ce que** pendant l'installation, lors d'une étape d'insertion en interférence du fût de la vis dans la structure, la couche (30) lubrifiante est partiellement arrachée du fût de la vis.

18. Utilisation d'au moins une fixation (10 ; 40) métallique selon l'une des revendications 1 à 12, au travers d'un perçage (20) traversant au moins deux éléments de structure (22, 24) d'un aéronef, pour dissiper dans au moins un élément de structure des courants électriques, lorsque la tête d'au moins ladite fixation est frappée par la foudre.

## Patentansprüche

1. Metallische Befestigung (10; 40) zum Zusammenfügen mit Presspassung von mindestens zwei Strukturelementen (22, 24), die eine durchgehende Bohrung (20) umfassen, wobei die Befestigung einen verbreiterten Kopf (12; 42), einen Schaft (14; 44), der vor der Installation einen Außendurchmesser (D₁), der größer ist als ein Innendurchmesser (D₃) der Bohrung, aufweist, umfasst, wobei der Schaft eine leitende Oberfläche (26; 56) umfasst,
wobei bei der Befestigung mindestens die leitende Oberfläche (26; 56) mit einer schmierenden Schicht (30) bedeckt ist, deren Zusammensetzung ein Gemisch aus mindestens einem Polyolefin und einem Polytetrafluorethylen umfasst, wobei die Zusammensetzung derart bestimmt ist, dass sie eine ausreichende Haftung aufweist, um ihr Abreiben durch manuelle Handhabung der Befestigung zu verhindern, und die ausreichend schwach ist, um von der leitenden Oberfläche mindestens teilweise bei der Montage mit Presspassung der Befestigung abgerissen zu werden, **dadurch gekennzeichnet, dass** die schmierende Schicht (30) mindestens 80 Masse-% Polyolefin und Polytetrafluorethylen umfasst.

2. Befestigung (10; 40) nach Anspruch 1, derart, dass das Polyolefin ein Polyethylen oder ein Polypropylen ist.

3. Befestigung (10; 40) nach Anspruch 1, derart, dass die Schicht (30) auch ein Trockenmittel und/oder ein Biozid umfasst.

4. Befestigung (10; 40) nach Anspruch 1, derart, dass die leitende Oberfläche (26; 56) eine Schwefelsäureeloxierungsschicht mit einer Stärke kleiner als 1 µm umfasst.

5. Befestigung (10; 40) nach Anspruch 1, derart, dass die leitende Oberfläche (26; 56) ein Metall ist, das einer Passivierung unterzogen wurde.

6. Befestigung (10; 40) nach Anspruch 1, derart, dass die leitende Oberfläche (26; 56) eine Aluminiumschicht ist, die unter Vakuum abgeschieden wird.

7. Befestigung (10; 40) nach Anspruch 1, derart, dass die leitende Oberfläche (26; 56) die gesamte äußere Oberfläche des Schafts umfasst.

8. Befestigung (10; 40) nach Anspruch 1, derart, dass die leitende Oberfläche (26A, 26B) nur einen Abschnitt der äußeren Oberfläche des Schafts umfasst.

9. Befestigung (10; 40) nach Anspruch 8, derart, dass die leitende Oberfläche einen ringförmigen Abschnitt (26A) des Schafts der Befestigung umfasst.

10. Befestigung (10; 40) nach Anspruch 8, derart, dass die leitende Oberfläche einen axialen Abschnitt (26B) des Schafts der Befestigung umfasst.

11. Befestigung (10; 40) nach einem der vorstehenden Ansprüche, derart, dass die schmierende Schicht (30) außerdem einen Gewindeabschnitt der Befestigung abdeckt.

12. Befestigung (40) nach einem der Ansprüche 1 bis 11, die außerdem ein Zugendstück (50) und eine Bruchhohlkehle (48) umfasst, die bemessen ist, um unter einer bestimmten Spannungsbelastung zu brechen.

13. Verfahren zum Erhalten einer metallischen Befestigung (10; 40) zum Zusammenfügen mit Presspassung von mindestens zwei Strukturelementen (22, 24), die eine durchgehende Bohrung (20) umfassen, wobei das Verfahren einen Schritt umfasst des
- Bereitstellens einer metallischen Befestigung, die einen verbreiterten Kopf, einen Schaft, der vor der Installation einen Außendurchmesser (D1), der größer ist als ein Innendurchmesser (D3) der Bohrung, aufweist, umfasst, wobei der Schaft eine leitende Oberfläche umfasst,
und **dadurch gekennzeichnet, dass** es folgende Schritte umfasst:
- Sprühen auf mindestens einen Teil der Befestigung einer alkalischen Lösung, die 60 bis 80 Masse-% eines Lösemittels mit wässriger Basis und 20 bis 35 Masse-% eines Gemischs aus mindestens einem Polyolefin und einem Polytetrafluorethylen umfasst, oder Einweichen darin,
- Trocknen der Befestigung derart, dass eine schmierende Schicht (30) erhalten wird, die ein Gemisch aus mindestens einem Polyolefin und einem Polytetrafluorethylen umfasst.

14. Verfahren nach Anspruch 13, wobei das Trocknen bei einer Temperatur zwischen 60 °C und 80 °C ausgeführt wird.

15. Verfahren nach Anspruch 13, wobei ein Schritt des Zentrifugierens nach dem Einweichen und vor dem Trocknen ausgeführt wird.

16. Verfahren nach Anspruch 13, wobei dem Schritt des Sprühens oder Einweichens ein Schritt des Aufbringens einer Aluminiumschicht oder ein Schritt des Schwefelsäureeloxierens vorangeht.

17. Verfahren zur Installation einer metallischen Befestigung (10; 40) durch eine durchgehende Bohrung (20) von mindestens zwei Strukturelementen (22, 24), wobei die Befestigung einen verbreiterten Kopf (12; 42) und einen Schaft (14; 44) umfasst, der vor der Installation einen Außendurchmesser (D₁), der größer ist als ein Innendurchmesser (D₃) der Bohrung, aufweist, wobei der Schaft eine leitende Oberfläche (26; 56) umfasst, **dadurch gekennzeichnet, dass** vor der Installation mindestens die leitende Oberfläche (26) mit einer schmierenden Schicht (30) beschichtet wird, die mindestens 80 Masse-% eines Gemischs aus mindestens einem Polyolefin und einem Polytetrafluorethylen umfasst, und dadurch, dass während der Installation, bei einem Schritt des Einfügens mit Presspassung des Schafts der Schraube in die Struktur die schmierende Schicht (30) teilweise von dem Schaft der Schraube abgerissen wird.

18. Verwendung mindestens einer metallischen Befestigung (10; 40) nach einem der Ansprüche 1 bis 12 durch eine durchgehende Bohrung (20) von mindestens zwei Strukturelementen (22, 24) eines Luftfahrzeugs, um in mindestens einem Strukturelement elektrische Ströme abzuleiten, wenn der Kopf mindestens der Befestigung von Blitz getroffen wird.

## Claims

1. Metal fastener (10; 40) to assemble with interference at least two structural elements (22, 24) comprising a through-bore (20), the fastener comprising an enlarged head (12; 42), a drum (14; 44) having, before installation, an outer diameter (D₁) greater than an inner diameter (D₃) of the bore, said drum comprising a conductive surface (26; 56),
wherein at least the conductive surface (26; 56) of the fastener is covered by a lubricating layer (30) of which the composition comprises a mixture of at least one polyolefin and a polytetrafluoroethylene, said composition being determined so as to have a sufficient adhesion to prevent the abrasion thereof by manual handling of the fastener and sufficiently low to be teared off from the conductive surface, at least partially during the mounting of the fastener by interference, **characterised in that** the lubricating layer (30) comprises at least 80% by mass of polyolefin and polytetrafluoroethylene.

2. Fastener (10; 40) according to claim 1, such that the polyolefin is a polyethylene and a polypropylene.

3. Fastener (10; 40) according to claim 1, such that said layer (30) also comprises a desiccant and/or a biocide.

4. Fastener (10; 40) according to claim 1, such that the conductive surface (26; 56) comprises a sulphuric anodising layer with a thickness less than 1µm.

5. Fastener (10; 40) according to claim 1, such that the conductive surface (26; 56) is a metal having undergone a passivation.

6. Fastener (10; 40) according to claim 1, such that the conductive surface (26; 56) is an aluminium layer deposited under vacuum.

7. Fastener (10; 40) according to claim 1, such that the conductive surface (26; 56) comprises all of the outer surface of the drum.

8. Fastener (10; 40) according to claim 1, such that the conductive surface (26A, 26B) comprises only one portion of the outer surface of the drum.

9. Fastener (10; 40) according to claim 8, such that the conductive surface comprises an annular portion (26A) of the drum of the fastener.

10. Fastener (10; 40) according to claim 8, such that the conductive surface comprises an axial portion (26B) of the drum of the fastener.

11. Fastener (10; 40) according to one of the preceding claims, such that the lubricating layer (30) furthermore covers a tapered portion of the fastener.

12. Fastener (40) according to one of claims 1 to 11, further comprising a traction tail (50) and a rupture recess (48) sized to break under a certain tension constraint.

13. Method for obtaining a metal fastener (10; 40) to assemble with interference at least two structural elements (22, 24) comprising a through-bore (20), the method comprising a step of:
- providing a metal fastener comprising an enlarged head, a drum having, before installation, an outer diameter (D1) greater than an inner diameter (D3) of the bore, said drum comprising a conductive surface, and **characterised in that** it comprises steps of:
- spraying a, or soaking in, an alkaline solution comprising by mass 60 to 80% of an aqueous base solvent and 20% to 35% of a mixture of at least one polyolefin and one polytetrafluoroethylene, one portion at least of the fastener,
- drying of the fastener so as to obtain a lubricating layer (30) comprising a mixture of at least one polyolefin and one polytetrafluoroethylene.

14. Method according to claim 13, wherein the drying is carried out at a temperature of between 60°C and 80°C.

15. Method according to claim 13, wherein a centrifugation step is carried out after soaking and before drying.

16. Method according to claim 13, wherein the spraying or soaking step is preceded by a step of depositing an aluminium layer or a sulphuric anodising step.

17. Method for installing a metal fastener (10; 40) through a through-bore (20) at least two structural elements (22, 24), the fastener comprising an enlarged head (12; 42) and a drum (14; 44) having, before installation, an outer diameter (D₁) greater than an inner diameter (D₃) of the bore, said drum comprising a conductive surface (26; 56), **characterised in that** before installation, at least the conductive surface (26) is coated by a lubricating layer (30) comprising at least 80% by mass of a mixture of at least one polyolefin and one polytetrafluoroethylene, and **in that** during the installation, during a step of inserting, in interference of the drum, the screw into the structure, the lubricating layer (30) is partially teared off from the drum of the screw.

18. Use of at least one metal fastener (10; 40) according to one of claims 1 to 12, through a through-bore (20), at least two structural elements (22, 24) of an aircraft, to dissipate electric currents into at least one structural element, , when the head of at least said fastener is struck by lightning.
